# EUROPEAN PATENT SPECIFICATION

(11) **EP 4 354 111 B1**
(45) Date of publication and mention of the grant of the patent: **09.09.2026**
(21) Application number: 23202089.1
(22) Date of filing: 06.10.2023
(51) Int. Cl.: G01N 1/31, G01N 1/36

(54) **APPARATUS AND PROCESS FOR EMBEDDING A HISTOLOGICAL SAMPLE IN AN EMBEDDING MATERIAL**
VORRICHTUNG UND VERFAHREN ZUM EINBETTEN EINER HISTOLOGISCHEN PROBE IN EIN EINBETTUNGSMATERIAL
APPAREIL ET PROCÉDÉ POUR INCORPORER UN ÉCHANTILLON HISTOLOGIQUE DANS UN MATÉRIAU D'INCORPORATION

(30) Priority: 13.10.2022 IT 202200021159
(43) Date of publication of application: 17.04.2024
(73) Proprietor: Inpeco SA, 6883 Novazzano (CH)
(72) Inventor: PEDRAZZINI, Mr. Gianandrea, CH-6883 Novazzano (CH); GARBARINO, Andrea, CH-6883 Novazzano (CH); BELLANDO, Flavio, CH-6883 Novazzano (CH)
(74) Representative: Buzzi, Notaro & Antonielli d'Oulx S.p.A.

(56) References cited:
- EP-A1- 3 220 125
- CN-U- 205 175 773
- CN-U- 213 792 266
- US-A1- 2017 241 712

## Description

### Field of the invention

The present invention generally concerns an apparatus and process for processing a histological sample in the embedding step. More particularly, the present invention relates to a dispensing system of embedding material arranged to dispense different layers of embedding material in the liquid state.

In the field of anatomical pathology, the embedding step of a histological tissue in an embedding material (typically paraffin) is performed after a surgical sample taken from a patient has undergone cutting ("grossing"), formalin fixation and a treatment ("processing") in which the tissue sample is dehydrated in alcohol and then clarified with xylene, so as to transform the tissue itself from hydrophilic to hydrophobic, in order to proceed with a first impregnation in paraffin.

### Prior art

Documents JP6383625B2, CN205175773U and US20170241712A1 describe different systems to automatically perform the embedding operation of a histological sample in an embedding material.

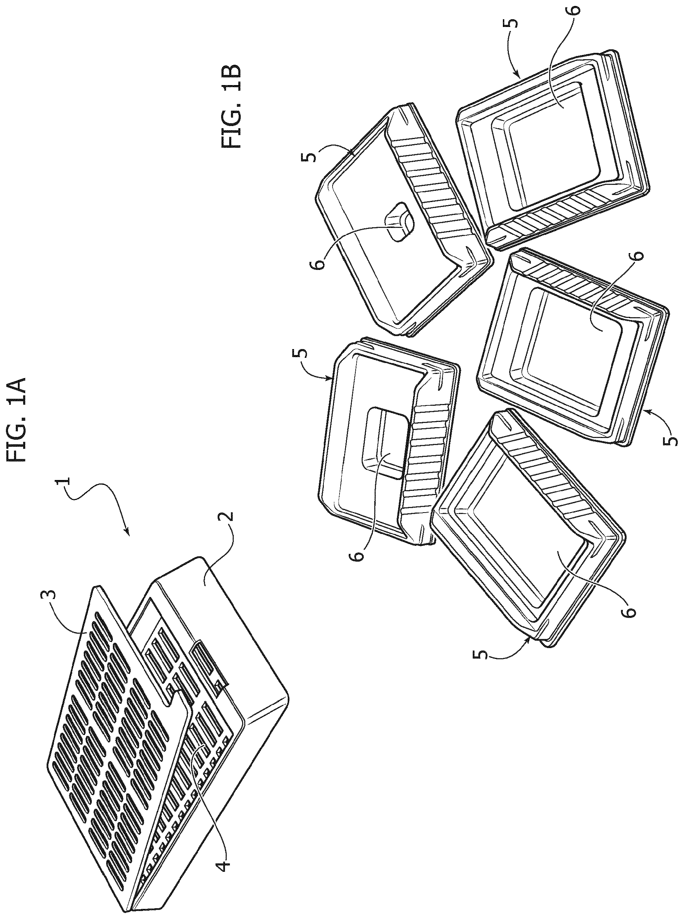

According to a per se known technique, in the aforementioned grossing step, the biological tissue is inserted into a histology cassette, within which it is while it undergoes the aforementioned processing operation, to be then directed towards the subsequent embedding step. An example of a conventional histology cassette is illustrated in Figure 1A of the annexed drawings. With reference to this figure, the number 1 indicates the assembly of a cassette 2 and a lid 3. In a typical example, the body of the cassette 2, made of plastic material, is in the form of a relatively flat container, with a flat bottom wall 4 and two pairs of opposite walls defining a containment cavity for the histological sample, which can be closed with the lid 3. The bottom wall 4 of the cassette 2 is shaped like a grid, for reasons that will become clear in the following.

According to a conventional process, which is performed manually, before carrying out the embedding procedure an operator separates the lid 3 of the cassette 2, takes the histological sample from the cassette 2 with the aid of a clamp and places it on the bottom of a mould intended to receive the embedding material, and eventually already arranged with a first layer of embedding material (typically paraffin at a temperature sufficient to keep it in a fluid state). The mould can be constituted, for example, of plastic or metallic material and can have a bottom of dimensions which vary according to the sample to be received.

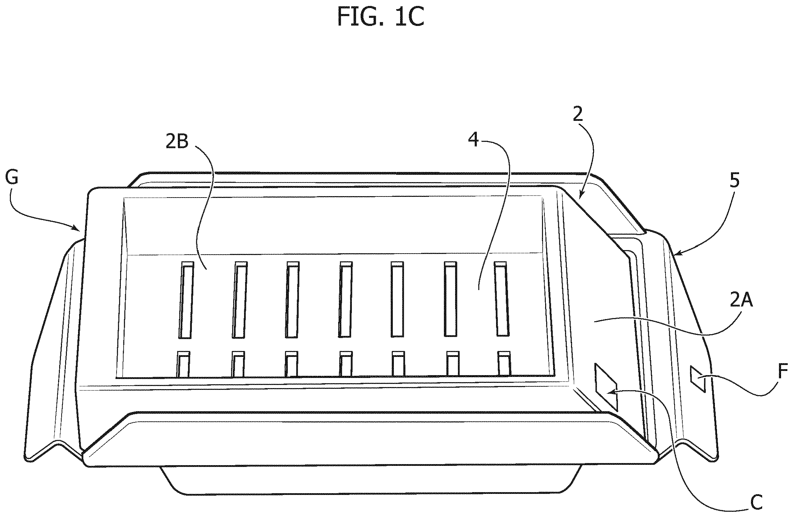

Figure 1B of the annexed drawings illustrates some examples of moulds 5 of a conventional type. The moulds 5 are configured and sized to receive the body of a cassette 2 above them. Indeed, after the histological sample has been positioned on the bottom of a mould 5, the cassette 2 (separated from the lid 3) is applied on top of the mould 5, forming a containment group G as illustrated in Figure 1C. Still with reference to Figure 1B, it can be seen that, although the external dimensions of each mould 5 are chosen in such a way as to allow the application of the body of the cassette over the mould, each mould 5 has a bottom cavity 6, intended to receive the histological sample, which varies in size from mould to mould, depending on the histological sample to be received.

According to the conventional procedure, the operator pours a first layer of embedding material on the bottom 6 of a mould 5 and then inserts the histological sample taken from a cassette on the bottom 6 of the mould 5. This step is extremely critical to ensure a high reliability of the examination that is subsequently performed on the sample. In fact, the operator must pay attention to place the histological sample on the bottom of the mould with the most appropriate orientation in order to guarantee the best results in the next microtomy step, in which the sample embedded in a block of embedding material is subjected to the cut.

Once the operator has placed the histological sample on the bottom of the mould 5, orienting it in the most appropriate way, he applies the cassette 2 above the mould 5.

Once this operation has been performed, the operator places the mould 5 containing the histological sample, with the cassette 2 applied above it, under a dispensing tap of embedding material (typically paraffin) maintained at a temperature sufficient to leave it in a fluid state. In this step, the embedding material is poured by gravity into the mould 5, making it pass through openings of the bottom wall 4 of the cassette 2. Fluid is poured in sufficient quantity to fill the mould and the containment space of the cassette above the mould.

Once the mould 5 has been filled with embedding material, it must be subjected to cooling to solidify the embedding material. At that point, the solidified body of the embedding material, with the histological sample embedded therein, is separated from the mould 5 for further manipulation. The body of the cassette 2 remains joined to the solidified body.

With reference to the dispensing step of the embedding material in the liquid state, a typically adopted solution involves a heated tank into which the solid embedding material is poured in grains, to be melted thanks to the heat generated in the tank. The heated tank has a considerable capacity, for example on the order of 2 liters, so that it can receive a considerable volume of embedding material which is then liquefied within the tank. The embedding material in the liquid state is then used in small doses through a dispensing tap, doses on the order of about 6 grams for each containment group G.

This solution, however, is not without drawbacks.

First, such a solution involves a considerable energy consumption to heat the entire volume of the tank, having to bring all the inserted embedding material to a liquid state.

Secondly, in the event of a failure of the dispensing tap - for example due to a control valve remaining permanently in the open position - all the liquid embedding material is lost, thus pouring the entire paraffin content onto other eventual moving parts in the system, and thus having to start again with the melting operations of a large quantity of embedding material.

In addition, the initialization time of the process is particularly long, as it is necessary to melt a large quantity of solid material before starting with dispensing.

Moreover, it is necessary to keep all the paraffin in temperature with possible problems of denaturation, i.e. chemical alterations of the paraffin due to maintaining the paraffin at high temperatures for an extended time.

These drawbacks are also particularly critical in the context of an automated processing and anatomical pathology system that does not involve the manual interaction of an operator.

### Object of the invention

The object of the present invention is to solve the above-mentioned drawbacks.

In particular, it is an object of the present invention to realize an apparatus and process for dispensing different layers of embedding material in the liquid state, which allows the efficiency and reliability of the result to be greatly increased, compared with conventional techniques.

A further object of the invention is to achieve all of the above purposes with relatively simple and low-cost means.

### Summary of the invention

In view of achieving one or more of the above objects, the invention relates to an apparatus according claim 1.

It is also an object of the present invention the process that is implemented by means of the apparatus described above.

Further advantageous features of the invention are defined in the appended claims and description below.

### Brief description of figures

Further features and advantages of the invention will result from the following description with reference to the appended drawings, provided purely by way of non-limiting example, in which:
- Figure 1A is a perspective view of a histology cassette of a known type, which can also be used in the apparatus according to the invention,
- Figure 1B shows a series of moulds of a known type which can also be used with the apparatus according to the invention,
- Figure 1C is a perspective view of a cassette applied over a mould, according to a configuration which can also be used in the apparatus according to the invention,
- Figure 2 is a perspective view illustrating some features of a dispensing system of embedding material, according to an embodiment of the invention,
- Figure 3 is a section view showing an unheated upper portion of the system of the previous figure,
- Figure 4 is a further section view illustrating a heated lower portion of the system shown in Figure 2,
- Figure 5 is a further section view of the components illustrated in the previous figure, according to a different section plane,
- Figure 6 is a further section view of the heated lower portion, according to a further section plane.

### Detailed description of multiple embodiments

The following description illustrates various specific details aimed at a deep understanding of examples of one or more embodiments. Embodiments may be realized without one or more of the specific details, or with other methods, components, materials, etc.. In other cases, known structures, materials or operations are not shown or described in detail to avoid obscuring various aspects of the embodiments. Reference to "an embodiment" within this description indicates that a particular configuration, structure or feature described according to the embodiment is included in at least one embodiment. Thus, sentences such as "in an embodiment", possibly occurring in different points in this description, do not necessarily refer to the same embodiment. In addition, particular conformations, structures or features may be appropriately combined in one or more embodiments and/or associated to the embodiments in a different way than illustrated here, so that for example a feature exemplified here according to a figure may be applied to one or more embodiments exemplified in a different figure.

References illustrated herein are for convenience only and therefore do not limit the scope of protection or the extent of the embodiments.

The present invention relates to an apparatus for embedding a histological sample in an embedding material, comprising a dispensing system 8 of embedding material, arranged to dispense different layers of embedding material in the liquid state. As indicated at the beginning of this description, the different layers of liquid material can be dispensed in a containment group G (set of a mould 5 and cassette 2) according to respective steps of a process for embedding a histological sample in the embedding material. More specifically, a first layer of embedding material (typically paraffin) is dispensed at the bottom of a respective mould 5, after the histological sample has been placed at the bottom of the mould 5 (e.g. by means of an operator). Following the dispensing of the first layer, a cassette 2 is placed over the mould 5, in order to obtain a containment group G as shown in Figure 1C. A second layer of embedding material is dispensed on the containment group G (formed by mould 5 and cassette 2) as explained in more detail below.

In one or more embodiments, the apparatus is fully automated so that the histological sample and the embedding material can be processed without manual operations performed by an operator.

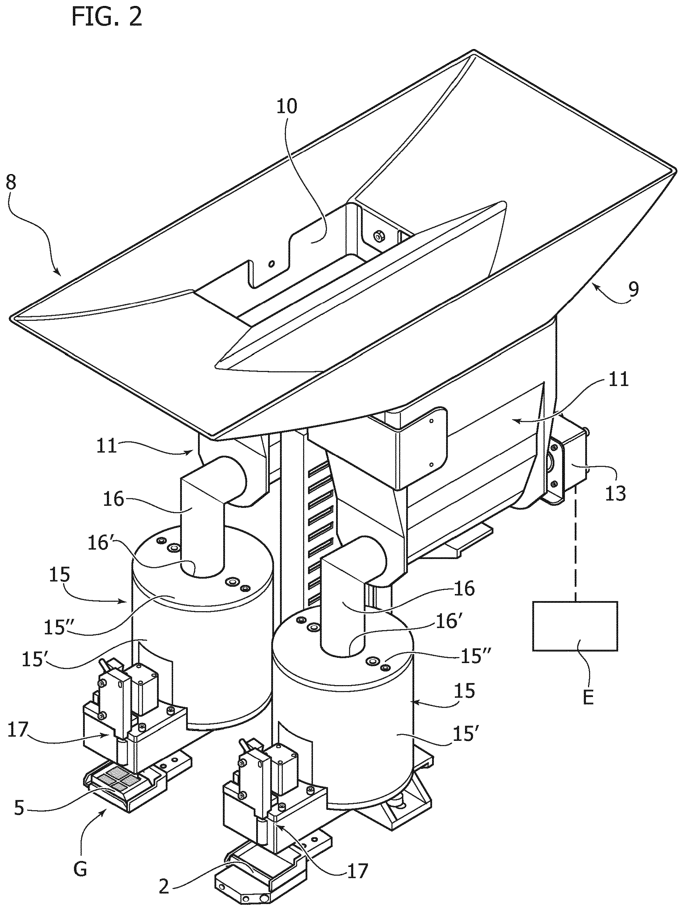

Figure 2 shows the part of the apparatus related only to the dispensing system 8. However, the dispensing system 8 is intended to be integrated within an automation system that can work continuously to carry out various processing operations on embedding material, before and after the dispensing step of layers of embedding material.

In this regard, Italian patent application No. 102021000013757 filed by the same Applicant, and which forms part of the state of the art under Article 46(3) of the Italian Industrial Property Code, describes additional parts of the automation system, before or after the dispensing step.

With reference to process operations before the dispensing step, the apparatus may comprise a bench on which an input area is defined that is configured to receive from a transport system cassettes 2 containing histological samples. Automated transport systems are provided upstream and downstream of the apparatus. The transport system which is arranged upstream feeds cassettes 2 containing histological samples to be analyzed, while the transport system downstream of the apparatus feeds histological samples, each embedded in a body of embedding material, to the next station of an automated sample processing line. Preferably, such systems are made according to what is described in the Italian patent application No. 102021000009788 by the same Applicant. The construction details of the transport systems are not described here, both as they can be made in any known way, and as they, taken alone, do not fall within the scope of the present invention. It should be noted that the upstream and downstream transport systems, in a less preferable and not illustrated embodiment, can also be manual.

The apparatus includes an electronic controller E (shown only schematically in Figure 2). The electronic controller E is configured and programmed to control the automated devices of the apparatus, including the dispensing system 8, and to possibly assist an operator working in a working area.

The apparatus further comprises a manipulator device of any known type, arranged to pick up the cassettes received in the input area and to lay them, if necessary, in an accumulation area provided with a system to maintain the cassettes in an illustrated temperature range. The manipulator device can be a robot of any known type preferably having a movable head along three mutually orthogonal axes X, Y, Z.

In one or more embodiments, the working area, where there may be an operator, receives only one cassette at a time sequentially. Only when the cycle of operations to be performed in the working area on a particular cassette 2 is over, the system enables the feeding to the working area of a new cassette. When the signal indicating the completion of the cycle of operations performed on cassette 2 that is in the working area is received by the electronic controller E, the latter controls the manipulator device to pick up a given cassette from the accumulation area and feed it to the working area. The electronic controller E can be configured and programmed to perform a selection ("sorting") of the cassette to be picked up.

In one or more embodiments, in the working area, an operator manually performs the necessary operations to arrange a histological sample within a respective mould 5, orienting it appropriately. Each time a cassette 2 reaches the working area, the operator picks up the sample and lays it on the bottom of a respective mould 5 after having preliminarily poured on the bottom of the mould 5 a first layer of embedding material (typically paraffin) through a dispensing station. The operator applies the cassette 2 over the mould 5 and places the resulting group G on a transfer device to transport the group towards a further step in the process. Figure 1C of the attached drawings shows the result of the above operations. Each containment group G comprises a mould 5 on whose bottom 6 there is the first layer of embedding material dispensed by the dispensing station, in which the operator has placed and then oriented the histological sample. The body of the cassette 2 is applied over the mould 5 as a lid. Thus, the mould 5 and the body of the cassette 2 have dimensions suitable for this purpose. The body of the cassette 2 defines a cavity 2B intended to be filled with liquid embedding material, whose bottom wall 4 has through openings, in order to allow the passage of the embedding material that is poured through the cavity 2B within the mould 5 below. The inclined end surface 2A of the body of the cassette 2, remains in a position exposed to view. Preferably, the cassette 2 comprises an information carrier C, which may be a code of any known type (such as a bar code) but in the example is a QR code. Even the mould may include its own information carrier F. Due to these features, it is achieved in the process and apparatus according to the invention the advantage of continuous traceability of each processed sample, which allows to associate the sample with identifying information related to it during the whole course of operations performed in the apparatus.

The transfer device brings the mould 5 containing the histological sample with the body of the cassette 2 applied over it to near the dispensing system 8.

The following description shows the peculiar features of the dispensing system 8 of embedding material, arranged to dispense the above-mentioned layers of embedding material in the liquid state. The liquid material is dispensed after a melting step of solid state material introduced at the beginning of the process.

Referring to the perspective view of Figure 2, according to the present invention the dispensing system 8 comprises a containment tank 9 configured to receive solid grains of embedding material, later to be melted. The containment tank 9 is only arranged to contain and convey the solid grains of embedding material towards a lower portion of the system 8, downstream of the tank 9, which allows to melt and dispense the embedding material in an automated manner. The tank 9 comprises an upper opening 10 for inserting the grains. The grains are conveyed by gravity within the tank 9, towards the aforementioned lower portion of system 8. The tank 9 is not provided with heating means to heat its volume, as it is only arranged to convey the solid grains later to be melted.

Still with reference to Figure 2, the dispensing system 8 comprises at least one hopper 11 operatively connected to the containment tank 9, at a lower end thereof opposite to the upper opening 10.

The hopper 11 is configured to gradually convey the previously poured solid material into the containment tank 9. Each hopper 11 comprises a screw conveyor 12 arranged on a bottom portion of the hopper 11, and transversely extended with respect to the vertical spacing of the tank 9 and the hopper 11. The screw conveyor 12 is controlled in rotation by a respective motor 13, in order to convey the solid grains to a further step of the process.

According to a preferred embodiment illustrated in the appended drawings, the dispensing system 8 comprises two hoppers 11 operating in parallel and both connected to the containment tank 9. Preferably, the dispensing system 8 has a total capacity of a grain quantity of about 3.5 kg, while each hopper 11 can contain about 600 g of embedding material.

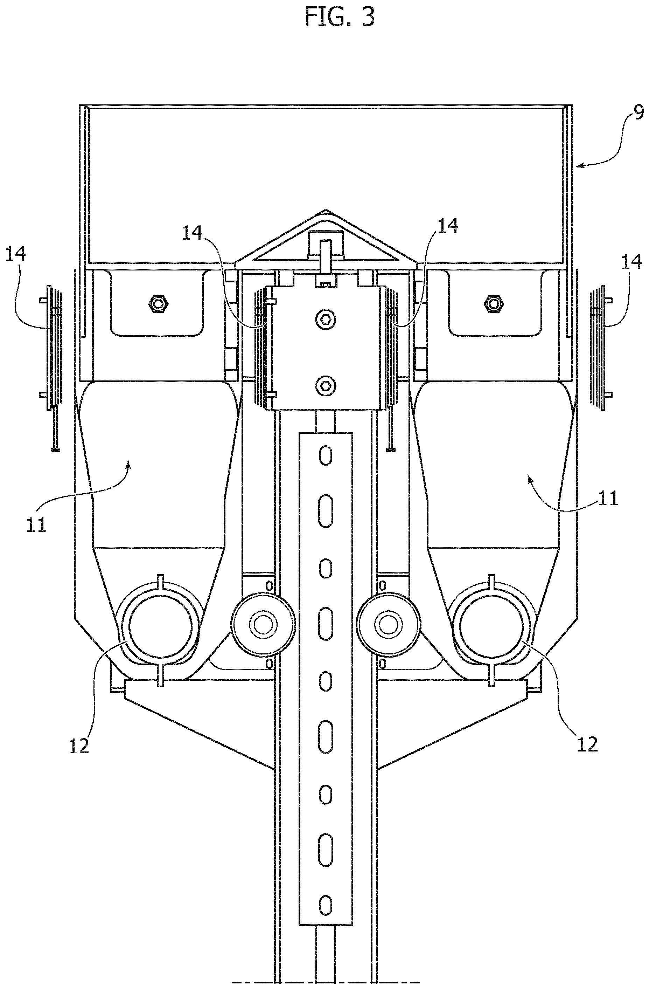

Figure 3 illustrates a section view of a part of the system 8, specifically of hoppers 11. In that figure, reference 14 shows a plurality of photocell sensors to verify the level of remaining grains in the hoppers 11. According to the specific configuration illustrated in Figure 3, each hopper 11 has a photocell sensor 14 on each side, so that two pairs of sensors 14 are made. Each pair of sensors 14 is configured to verify the level of remaining grains in the respective hopper 11. In the event that one of the sensors activates, the electronic controller E receives a signal to be transmitted to an operator, i.e. by means of a human-machine interface device, which communicates the need to refill the upper containment tank 9 with grains of embedding material (paraffin).

The operating principle of the hopper 11 is to drop limited quantities of solid grains down to a heated lower portion of the system 8, so that the same quantity of liquid material available for dispensing is maintained at all times, with the minimum thermal shock. Thus, it should be noted that the hopper 11 does not provide any heating means to melt the material received from the tank 9.

Downstream of the hopper 11, the dispensing system 8 comprises at least one heated container 15 operatively connected to the hopper 11 by means of at least one connection duct 16. The heated container 15 is configured to receive the material conveyed from the hopper 11 and to melt the gradually received embedding material. The containment tank 9, the hopper 11 and the heated container 15 are then cascaded together, so that limited quantities of embedding material are gradually melted in the heated container 15, with respect to the total quantity introduced in the containment tank 9.

The heated container 15 comprises heating means to constantly maintain the container 15 at a temperature between about 65° C and 75° C, so as to prevent the embedding material from solidifying along the way to the final dispensing. It should be noted that the aforementioned upper temperature limit is due to the fact that the histological samples degrade at a temperature above 75° C.

According to a further feature, the heated container 15 has a smaller volume than that of the containment tank 9 and the hopper 11, and more specifically the volume of the container 15 is equal to or less than 5-10% of the sum of the volumes of the tank 9 and the hopper 11. As a result of this feature, in the event of failures of the system 8 - for example due to a control valve remaining permanently in the open position - only a portion of the total quantity of material included in the tank is dispersed, in particular the already melted material collected in the container 15.

In one or more embodiments, the heated container 15 is a container of cylindrical shape defining a side wall 15', an upper wall 15" and a bottom wall 15‴. The upper wall 15" has a central opening 16' connected to an end portion of the connection duct 16, to receive the solid grains from the hopper 11.

In view of the above, the heated container 15 is a container operating as a boiler, arranged to melt the solid material coming from the hopper 11, making the liquid material available for final dispensing. To perform the final dispensing, the dispensing system 8 also comprises a dispensing device 17 connected to the heated container 15, to dispense the previously melted liquid material within the heated container 15. Details of the dispensing device 17 and the dispensing step are given later in this description.

Referring to a preferred embodiment illustrated in the drawings, the dispensing system 8 comprises two parallel heated containers 15, each connected to a respective hopper 11 in communication with the containment tank 9. In the embodiment illustrated in the drawings, each heated container 15 comprises a respective dispensing device 17, so as to parallelize the dispensing of different layers of embedding material. According to an alternative embodiment not illustrated, the dispensing system 8 comprises a single heated container 15 to which two dispensing devices 17 are connected, still to parallelize the dispensing of different layers of embedding material.

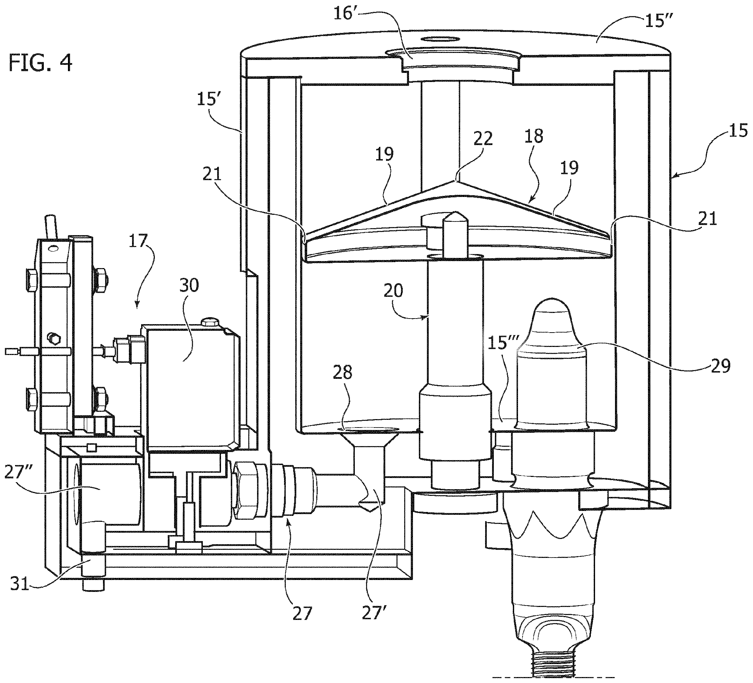

Figure 4 shows a section view of the heated container 15 and the dispensing device 17. Inside the heated container 15 there is a heated area 18 for melting the solid grains. The heated area 18 comprises a heated surface 19 arranged to receive by gravity the solid material from the upper opening 16', and to melt the material thus deposited on the surface 19. Still with reference to Figure 4, the heated area 18 is spaced within the container 15 at an intermediate height between the top wall 15" and the bottom wall 15‴, with a base circumference of slightly smaller diameter than that of the container 15. The heated area 18 is supported at the aforementioned intermediate height by a support rod 20 vertically extended within the container 15 from the bottom wall 15‴. In other words, the heated area 18 and the support rod 20 form an umbrella-like configuration, since the support rod 20 bears the heated area 18 which has an extension substantially covering the volume of container 15 below the heated area 18, preventing the direct fall of the material from the upper opening 16' towards the bottom wall 15‴.

According to a peculiar feature, within the heated container 15 there is a peripheral free space 21 obtained between the inner surface of the side wall 15' of the heated container 15 and the perimeter of the heated area 18. Such a free space 21 is obtained with the function of letting flow the material melted by the heated area 18, towards the bottom wall 15‴ of the heated container 15. In this regard, the heated surface 19 has an inclined shape so as to direct the liquid material from a central area of the heated surface 19, towards the peripheral free space 21. According to a preferred embodiment, the heated surface 19 has a conical shape with two sides sloping in opposite directions, joined at a central upper vertex 22. Alternatively, still to allow the outflow of liquid material towards the free space 21, the heated surface 19 may have a shape of the spherical cap type. The free space 21 between the base circumference of the heated area 18 and the inner surface of the side wall 15' of the container 15 is in the order of 1 mm. This size allows liquid paraffin to flow, but also allows impurities to be retained, so that the umbrella structure also acts as a filter to retain impurities.

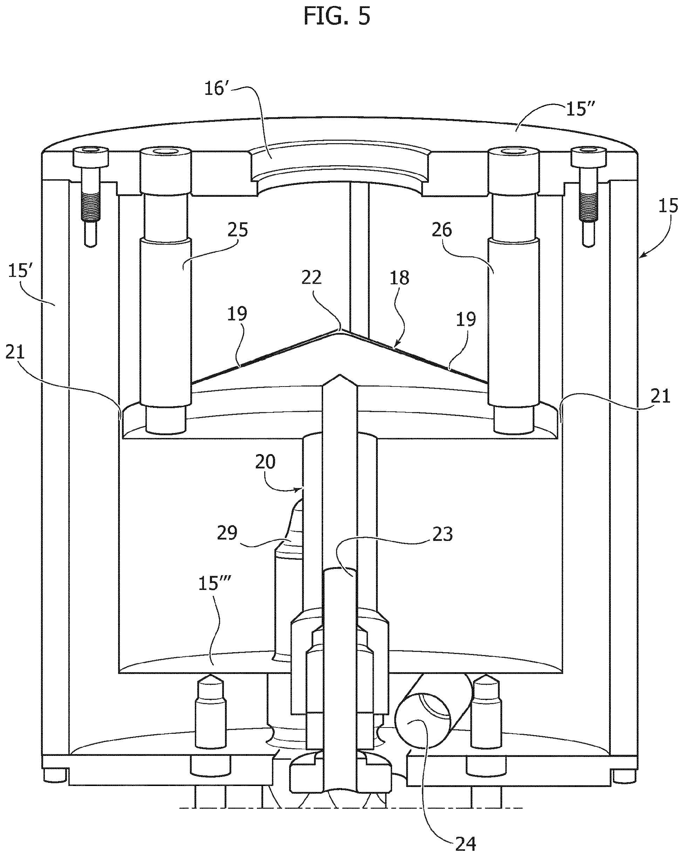

As previously indicated, the heated container 15 comprises heating means to reach the temperature necessary to melt the solid grains received through the upper opening 16'. Figure 5 illustrates further features of the container 15, also in this regard.

Reference 23 indicates an axial housing included within the support rod 20 to include a first heating resistance able to heat the heated surface 19 on which the solid material settles. Reference 24 indicates a further housing extended below the bottom wall 15‴, to include a second heating resistance able to heat the structure of the container 15.

References 25, 26 indicate respective vertical channels obtained between the upper wall 15" of the heated container 15 and the heated surface 19, respectively arranged to house a temperature sensor (to measure the temperature reached within the container 15) and a vent duct for the passage of air. It should be noted that the aforementioned temperature sensor is useful for constantly monitoring the reached temperature, so as to ensure a correct process free from anomalies due to incorrect temperature ranges.

As previously indicated, the dispensing system 8 includes a dispensing device 17 to dispense the previously melted liquid material within the heated container 15. Returning to the section view of figure 4, the dispensing device 17 is operatively connected to the heated container 15 by means of a dispensing duct 27. The dispensing duct 27 has a proximal portion 27' connected to a bottom opening 28 obtained on the bottom wall 15'" of the heated container 15. Consequently, the liquid material fallen by gravity on the bottom wall 15"', through the aforementioned peripheral free space 21, is made flow within the duct 27 through the bottom opening 28. The dispensing duct 27 also comprises a distal portion 27" connected to the dispensing device 17. Reference 29 indicates a level sensor for measuring the level of liquid material deposited on the bottom of the container 15. The sensor is operatively connected to the electronic controller E to transmit a signal related to the level of accumulated liquid material, so as to consequently control the operation of the hopper 11.

The dispensing device 17 comprises an automatic adjustment device for automatically adjusting the outflow of liquid material. The adjustment device comprises a solenoid valve 30 and a dispensing tap 31. The tap 31 is controlled by the solenoid valve 30 which is controlled by the electronic controller E on the basis of a feedback signal sent by a sensor associated to the dispensing device 17. The sensor is able to detect the level of the embedding material, and can be an optical sensor of any known type, for example operating in reflection, able to measure the distance of the sensor itself with respect to the free surface of the fluid of embedding material poured into the group G or the mould 5. The signal emitted by the sensor can also be displayed on a monitor in the form of a numerical indication of the distance between the sensor and the free surface of the embedding material. During the dispensing step, the distance progressively decreases until a predetermined value is reached, corresponding to the correct quantity of embedding material, which is predetermined according to the size of the cassette 2 and the mould 5 arranged below the cassette 2. The electronic controller E is therefore able to close the solenoid valve 30 which controls the dispensing of embedding material and consequently stop the dispensing of the material upon reaching a correct quantity. The electronic controller E during this dispensing operation takes into account, through a specific algorithm, the information already previously possessed on the volume occupied by the histological sample within the mould 5, as well as on the size of the bottom of the mould 5 itself, in order to adequately calibrate the dispensing of the appropriate quantity of embedding material to reach the aforementioned predetermined level.

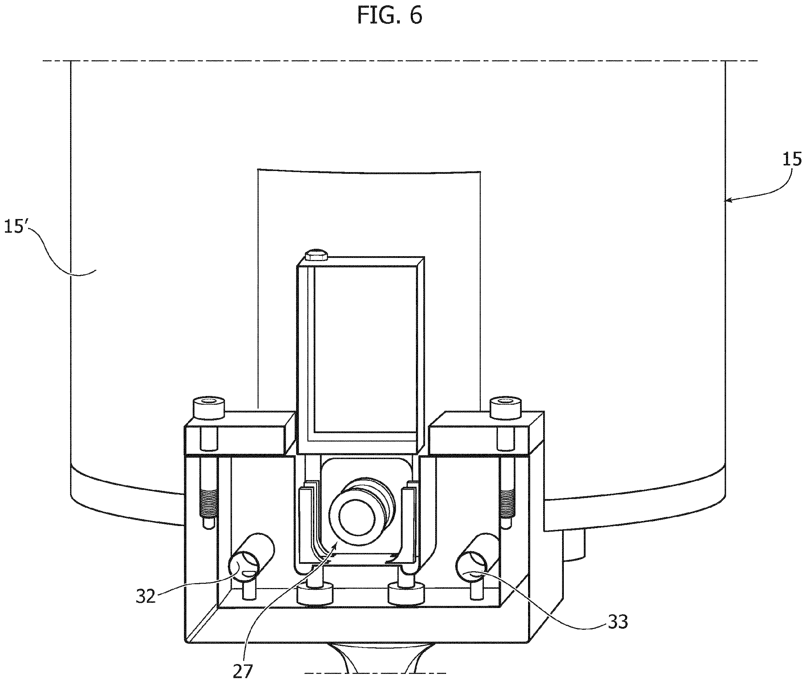

Figure 6 shows a section view of the connection portion between the dispensing device 17 and the end part of the heated container 15. References 32, 33 respectively indicate a housing for a temperature sensor, to measure the temperature reached in the dispensing duct 27, and a housing for a further heating resistance, to heat the duct 27 so as to prevent the paraffin from solidifying along the way towards the dispensing tap 31.

As mentioned, the dispensing of the embedding material is carried out in a controlled and precise manner, as the system 8 includes a sensor able to detect the level of embedding material within the mould 5 or the group G, assisted by an algorithm able to calibrate the dispensing on the basis of a series of parameters known to the electronic controller E. The moulds 5 are located in a position below the dispensing tap 31 (Figure 2), to receive a flow of embedding material, which is therefore at a temperature useful to keep it in a fluid state.

As previously indicated, in an alternative preferred embodiment, two dispensing devices 17 can be connected to a single heated container to parallelize the dispensing of different layers of embedding material.

Thanks to the previously described features, the present invention provides for the melting of limited quantities of embedding material necessary for the continuous production of a limited number of paraffin blocks, avoiding the melting at the same time of large quantities which are then used within a period of one or more days depending on laboratory requests. All this results in avoiding possible problems of paraffin denaturation, i.e. chemical alterations of paraffin due to the preservation of paraffin at high temperatures for an extended time.

To carry out operations following the step of melting and dispensing of the embedding material, the apparatus can further comprise a cooling system arranged to cool the containment groups G each containing the histological sample and the embedding material in the liquid state, previously dispensed by means of the dispensing system 8.

To perform steps after cooling, the apparatus can further comprise a device for the detachment of the solidified material from the respective cooled mould. A transport device can provide for feeding the solidified material including the histological sample to the output or to an accumulation area. In one or more embodiments the apparatus comprises an automatic output transport system to feed the moulds, from which the embedding material in the solid state has been detached, through a cleaning station to remove the residues of the embedding material and then convey them back to a feeding system of the moulds in the working area.

Naturally, without prejudice to the principle of the invention, the construction details and the embodiments may vary widely with respect to what is described and illustrated purely by way of example, wherein the scope of the present invention is defined in the appended set of claims.

## Claims

1. Apparatus for processing a histological sample to be embedded in an embedding material, comprising a dispensing system (8) of embedding material arranged to dispense different layers of embedding material in the liquid state, wherein said dispensing system (8) comprises:
- a containment tank (9) for receiving solid grains of embedding material,
- at least one hopper (11) operatively connected to said containment tank (9) configured to gradually convey the material poured within the containment tank (9),
- at least one heated container (15) operatively connected to the hopper (11) by means of at least one connection duct (16), wherein the heated container (15) comprises heating means arranged to heat the volume of the heated container (15) at a temperature useful for melting the material received in a solid state from the hopper (11), so that the heated container (15) is arranged to receive material still in a solid state conveyed by the hopper (11) and to melt the solid grains making the gradually received embedding material in the liquid state,
- at least one dispensing device (17) operatively connected to the heated container (15), arranged to automatically regulate the outflow of liquid material to be poured within a containment group (G) containing a histological sample,
- wherein the containment tank (9), the hopper (11) and the heated container (15) are connected to each other in cascade, so that limited quantities of embedding material received in the solid state from the hopper (11) are gradually melted in the heated container (15), compared to the total quantity introduced within the containment tank (9),
**characterized in that** the volume of said at least one heated container (15) is equal to or less than 5-10% of the sum of the volumes of said containment tank (9) and said least one hopper (11).

2. Apparatus according to claim 1, wherein said dispensing system (8) comprises an electronic controller (E) configured and programmed to control multiple dispensing processes, wherein said dispensing system (8) is integrated within an automation system configured to work continuously and to connect different processes on the embedding material, before and after the operations performed with the dispensing system (8).

3. Apparatus according to claim 1 or 2, wherein within the heated container (15) there is a heated area (18) for melting the solid grains, wherein the heated area (18) comprises a heated surface (19) arranged to receive by gravity the solid material from an upper opening (16') in communication with the hopper (11), and to melt the material thus deposited on the heated surface (19).

4. Apparatus according to claim 3, wherein the heated area (18) has an extension substantially covering the volume of the container (15) below the heated area (18), preventing the direct fall of the material from the upper opening (16') towards a bottom wall (15‴) of the heated container (15).

5. Apparatus according to claim 4, wherein within the heated container (15) there is a peripheral free space (21) obtained between the side surface of the heated container (15) and the perimeter of the heated area (18), wherein said free space (21) is obtained with the function of making the material melted on the heated surface (19) pass, towards the bottom of the heated container (15), wherein the heated surface (19) has an inclined shape so as to direct the liquid material from a central area of the heated surface (19), towards the peripheral free space (21).

6. Apparatus according to claim 5, wherein the heated area (18) is supported within the container (15) spaced above the bottom wall (15‴), by at least one support rod (20) vertically extending within the container (15) from the bottom wall (15‴), such that the heated area (18) and the support rod (20) form an umbrella configuration covering the volume of the container below the heated area (18), preventing the direct fall of material coming from the hopper (11) onto the bottom wall (15‴).

7. Apparatus according to claim 6, wherein the heated surface (19) has a general substantially conical shape with two sides sloping in opposite directions joined at a central upper vertex (22), or a general shape of the spherical cap type.

8. Apparatus according to claim 5 or 6, wherein the dispensing device (17) is operatively connected to the heated container (15) by means of a dispensing duct (27), wherein the dispensing duct (27) has a proximal portion (27') connected to a bottom opening (28) obtained on the bottom wall (15"') of the heated container (15).

9. Apparatus according to any one of claims 2-8, wherein the dispensing device (17) comprises an automatic adjustment device for automatically adjusting the outflow of liquid material, including a solenoid valve (30) and a dispensing tap (31), wherein the tap (31) is controlled by the solenoid valve (30) which is controlled by the electronic controller (E) on the basis of a feedback signal sent by a level sensor (29) for measuring the level of liquid material deposited on the bottom of the container (15).

10. Apparatus according to claim 9, wherein the electronic controller (E) is configured and programmed to take into account, during such dispensing operation, information previously acquired on the volume occupied by the histological sample within a mould (5), as well as on the size of the bottom of the mould (5), in order to adequately calibrate the dispensing of the quantity of embedding material to reach a predetermined level.

11. Apparatus according to claim 8, wherein said heating means comprise a first heating resistance able to heat the heated surface (19) on which the solid material is deposited, a second heating resistance able to heat the structure of the container (15), and a further heating resistance to heat the duct (27).

12. Apparatus according to any one of the preceding claims, wherein the dispensing system (8) comprises two heated containers (15) operating in parallel and connected in parallel to the containment tank (9) by means of a respective hopper (11), wherein each heated container (15) comprises a respective dispensing device (17), so as to parallelize the dispensing of different layers of embedding material.

13. Apparatus according to any one of claims 1-11, wherein the dispensing system (8) comprises a single heated container (15) to which two dispensing devices (17) are connected, to parallelize the dispensing of different layers of embedding material.

14. Apparatus according to any one of the preceding claims, wherein the heated container (15) is a container of cylindrical shape defining a side wall (15'), an upper wall (15") and said bottom wall (15‴), wherein the upper wall (15") has said upper opening (16') connected to an end portion of the connection duct (16), to receive the solid grains from the hopper (11).

15. Process for embedding a histological sample in an embedding material, wherein a step of dispensing embedding material is provided for dispensing different layers of embedding material in the liquid state, wherein said process comprises the steps of:
- setting up an apparatus according to any one of claims 1-14,
- inserting solid grains of embedding material within the containment tank (9),
- gradually conveying the poured material by means of the hopper (11),
- melting the solid grains gradually received from the hopper (11), by means of said heated container (15),
- dispensing a layer of embedding material in the liquid state by means of said dispensing device (17),
so that in the heated container (15) limited quantities of embedding material received in the solid state from the hopper (11) are gradually melted, compared to the total quantity introduced within the containment tank (9).

## Patentansprüche

1. Vorrichtung zum Verarbeiten einer histologischen Probe, die in ein Einbettungsmaterial eingebettet werden soll, umfassend ein Abgabesystem (8) für Einbettungsmaterial, das dazu eingerichtet ist, verschiedene Schichten von Einbettungsmaterial im flüssigen Zustand abzugeben, wobei das genannte Abgabesystem (8) umfasst:
- einen Vorratsbehälter (9) zur Aufnahme von festen Körnern von Einbettungsmaterial,
- mindestens einen Trichter (11), der mit dem genannten Vorratsbehälter (9) wirkverbunden ist und dazu konfiguriert ist, das in den Vorratsbehälter (9) eingefüllte Material allmählich zu fördern,
- mindestens einen beheizten Behälter (15), der mit dem Trichter (11) mittels mindestens eines Verbindungskanals (16) wirkverbunden ist, wobei der beheizte Behälter (15) Heizmittel umfasst, die dazu eingerichtet sind, das Volumen des beheizten Behälters (15) auf eine Temperatur zu erhitzen, die zum Schmelzen des in einem festen Zustand von dem Trichter (11) empfangenen Materials nützlich ist, so dass der beheizte Behälter (15) dazu eingerichtet ist, noch in einem festen Zustand befindliches, von dem Trichter (11) gefördertes Material zu empfangen und die festen Körner zu schmelzen, wodurch das allmählich empfangene Einbettungsmaterial in den flüssigen Zustand versetzt wird,
- mindestens eine Abgabevorrichtung (17), die mit dem beheizten Behälter (15) wirkverbunden ist und dazu eingerichtet ist, den Ausfluss von flüssigem Material, das in eine eine histologische Probe enthaltende Aufnahmegruppe (G) gegossen werden soll, automatisch zu regulieren,
- wobei der Vorratsbehälter (9), der Trichter (11) und der beheizte Behälter (15) kaskadenartig miteinander verbunden sind, so dass begrenzte Mengen von in festem Zustand von dem Trichter (11) empfangenem Einbettungsmaterial allmählich in dem beheizten Behälter (15) geschmolzen werden, verglichen mit der Gesamtmenge, die in den Vorratsbehälter (9) eingebracht wurde,
**dadurch gekennzeichnet, dass** das Volumen des genannten mindestens einen beheizten Behälters (15) gleich oder kleiner als 5-10 % der Summe der Volumina des genannten Vorratsbehälters (9) und des genannten mindestens einen Trichters (11) ist.

2. Vorrichtung nach Anspruch 1, wobei das genannte Abgabesystem (8) eine elektronische Steuerung (E) umfasst, die dazu konfiguriert und programmiert ist, mehrere Abgabeprozesse zu steuern, wobei das genannte Abgabesystem (8) in ein Automatisierungssystem integriert ist, das dazu konfiguriert ist, kontinuierlich zu arbeiten und verschiedene Prozesse an dem Einbettungsmaterial vor und nach den mit dem Abgabesystem (8) durchgeführten Operationen zu verbinden.

3. Vorrichtung nach Anspruch 1 oder 2, wobei sich in dem beheizten Behälter (15) ein beheizter Bereich (18) zum Schmelzen der festen Körner befindet, wobei der beheizte Bereich (18) eine beheizte Oberfläche (19) umfasst, die dazu eingerichtet ist, das feste Material von einer oberen Öffnung (16') in Verbindung mit dem Trichter (11) durch Schwerkraft zu empfangen und das so auf der beheizten Oberfläche (19) abgelagerte Material zu schmelzen.

4. Vorrichtung nach Anspruch 3, wobei der beheizte Bereich (18) eine Ausdehnung aufweist, die im Wesentlichen das Volumen des Behälters (15) unterhalb des beheizten Bereichs (18) abdeckt und den direkten Fall des Materials von der oberen Öffnung (16') zu einer Bodenwand (15‴) des beheizten Behälters (15) verhindert.

5. Vorrichtung nach Anspruch 4, wobei sich in dem beheizten Behälter (15) ein peripherer Freiraum (21) befindet, der zwischen der Seitenfläche des beheizten Behälters (15) und dem Umfang des beheizten Bereichs (18) ausgebildet ist, wobei der genannte Freiraum (21) mit der Funktion ausgebildet ist, das auf der beheizten Oberfläche (19) geschmolzene Material zum Boden des beheizten Behälters (15) passieren zu lassen, wobei die beheizte Oberfläche (19) eine geneigte Form aufweist, um das flüssige Material von einem zentralen Bereich der beheizten Oberfläche (19) zu dem peripheren Freiraum (21) zu leiten.

6. Vorrichtung nach Anspruch 5, wobei der beheizte Bereich (18) innerhalb des Behälters (15) beabstandet oberhalb der Bodenwand (15‴) von mindestens einem Stützstab (20) getragen wird, der sich vertikal innerhalb des Behälters (15) von der Bodenwand (15‴) erstreckt, so dass der beheizte Bereich (18) und der Stützstab (20) eine Schirmkonfiguration bilden, die das Volumen des Behälters unterhalb des beheizten Bereichs (18) abdeckt und den direkten Fall von von dem Trichter (11) kommendem Material auf die Bodenwand (15‴) verhindert.

7. Vorrichtung nach Anspruch 6, wobei die beheizte Oberfläche (19) eine allgemein im Wesentlichen konische Form mit zwei in entgegengesetzte Richtungen geneigten Seiten aufweist, die an einem zentralen oberen Scheitelpunkt (22) verbunden sind, oder eine allgemeine Form des Kugelkalottentyps.

8. Vorrichtung nach Anspruch 5 oder 6, wobei die Abgabevorrichtung (17) mit dem beheizten Behälter (15) mittels eines Abgabekanals (27) wirkverbunden ist, wobei der Abgabekanal (27) einen proximalen Abschnitt (27') aufweist, der mit einer Bodenöffnung (28) verbunden ist, die an der Bodenwand (15‴) des beheizten Behälters (15) ausgebildet ist.

9. Vorrichtung nach einem der Ansprüche 2-8, wobei die Abgabevorrichtung (17) eine automatische Einstellvorrichtung zum automatischen Einstellen des Ausflusses von flüssigem Material umfasst, einschließlich eines Magnetventils (30) und eines Abgabehahns (31), wobei der Hahn (31) von dem Magnetventil (30) gesteuert wird, das von der elektronischen Steuerung (E) auf der Grundlage eines von einem Füllstandsensor (29) gesendeten Rückkopplungssignals zum Messen des Füllstands von flüssigem Material, das auf dem Boden des Behälters (15) abgelagert ist, gesteuert wird.

10. Vorrichtung nach Anspruch 9, wobei die elektronische Steuerung (E) dazu konfiguriert und programmiert ist, während des genannten Abgabevorgangs zuvor erfasste Informationen über das von der histologischen Probe innerhalb einer Form (5) eingenommene Volumen sowie über die Größe des Bodens der Form (5) zu berücksichtigen, um die Abgabe der Menge an Einbettungsmaterial, um einen vorbestimmten Füllstand zu erreichen, angemessen zu kalibrieren.

11. Vorrichtung nach Anspruch 8, wobei die genannten Heizmittel einen ersten Heizwiderstand, der in der Lage ist, die beheizte Oberfläche (19), auf der das feste Material abgelagert wird, zu erhitzen, einen zweiten Heizwiderstand, der in der Lage ist, die Struktur des Behälters (15) zu erhitzen, und einen weiteren Heizwiderstand zum Erhitzen des Kanals (27) umfassen.

12. Vorrichtung nach einem der vorhergehenden Ansprüche, wobei das Abgabesystem (8) zwei parallel arbeitende beheizte Behälter (15) umfasst, die parallel mit dem Vorratsbehälter (9) mittels eines jeweiligen Trichters (11) verbunden sind, wobei jeder beheizte Behälter (15) eine jeweilige Abgabevorrichtung (17) umfasst, um die Abgabe verschiedener Schichten von Einbettungsmaterial zu parallelisieren.

13. Vorrichtung nach einem der Ansprüche 1-11, wobei das Abgabesystem (8) einen einzigen beheizten Behälter (15) umfasst, mit dem zwei Abgabevorrichtungen (17) verbunden sind, um die Abgabe verschiedener Schichten von Einbettungsmaterial zu parallelisieren.

14. Vorrichtung nach einem der vorhergehenden Ansprüche, wobei der beheizte Behälter (15) ein Behälter von zylindrischer Form ist, der eine Seitenwand (15'), eine obere Wand (15") und die genannte Bodenwand (15‴) definiert, wobei die obere Wand (15") die genannte obere Öffnung (16') aufweist, die mit einem Endabschnitt des Verbindungskanals (16) verbunden ist, um die festen Körner von dem Trichter (11) zu empfangen.

15. Verfahren zum Einbetten einer histologischen Probe in ein Einbettungsmaterial, wobei ein Schritt des Abgebens von Einbettungsmaterial zum Abgeben verschiedener Schichten von Einbettungsmaterial im flüssigen Zustand vorgesehen ist, wobei das genannte Verfahren die Schritte umfasst:
- Bereitstellen einer Vorrichtung nach einem der Ansprüche 1-14,
- Einführen von festen Körnern von Einbettungsmaterial in den Vorratsbehälter (9),
- allmähliches Fördern des eingefüllten Materials mittels des Trichters (11),
- Schmelzen der allmählich von dem Trichter (11) empfangenen festen Körner mittels des genannten beheizten Behälters (15),
- Abgeben einer Schicht von Einbettungsmaterial im flüssigen Zustand mittels der genannten Abgabevorrichtung (17),
so dass in dem beheizten Behälter (15) begrenzte Mengen von in festem Zustand von dem Trichter (11) empfangenem Einbettungsmaterial allmählich geschmolzen werden, verglichen mit der Gesamtmenge, die in den Vorratsbehälter (9) eingebracht wurde.

## Revendications

1. Appareil pour traiter un échantillon histologique destiné à être inclus dans un matériau d'inclusion, comprenant un système de distribution (8) de matériau d'inclusion agencé pour distribuer différentes couches de matériau d'inclusion à l'état liquide, dans lequel ledit système de distribution (8) comprend :
- un réservoir de confinement (9) pour recevoir des grains solides de matériau d'inclusion,
- au moins une trémie (11) reliée fonctionnellement audit réservoir de confinement (9) configurée pour acheminer progressivement le matériau versé à l'intérieur du réservoir de confinement (9),
- au moins un récipient chauffé (15) relié fonctionnellement à la trémie (11) au moyen d'au moins un conduit de raccordement (16), dans lequel le récipient chauffé (15) comprend des moyens de chauffage agencés pour chauffer le volume du récipient chauffé (15) à une température utile pour faire fondre le matériau reçu à l'état solide depuis la trémie (11), de sorte que le récipient chauffé (15) est agencé pour recevoir un matériau encore à l'état solide acheminé par la trémie (11) et pour faire fondre les grains solides rendant le matériau d'inclusion reçu progressivement à l'état liquide,
- au moins un dispositif de distribution (17) relié fonctionnellement au récipient chauffé (15), agencé pour réguler automatiquement l'écoulement du matériau liquide à verser à l'intérieur d'un groupe de confinement (G) contenant un échantillon histologique,
- dans lequel le réservoir de confinement (9), la trémie (11) et le récipient chauffé (15) sont reliés les uns aux autres en cascade, de sorte que des quantités limitées de matériau d'inclusion reçu à l'état solide depuis la trémie (11) sont progressivement fondues dans le récipient chauffé (15), par rapport à la quantité totale introduite à l'intérieur du réservoir de confinement (9),
**caractérisé en ce que** le volume dudit au moins un récipient chauffé (15) est égal ou inférieur à 5-10 % de la somme des volumes dudit réservoir de confinement (9) et de ladite au moins une trémie (11).

2. Appareil selon la revendication 1, dans lequel ledit système de distribution (8) comprend un contrôleur électronique (E) configuré et programmé pour commander de multiples processus de distribution, dans lequel ledit système de distribution (8) est intégré au sein d'un système d'automatisation configuré pour fonctionner en continu et pour relier différents processus sur le matériau d'inclusion, avant et après les opérations effectuées avec le système de distribution (8).

3. Appareil selon la revendication 1 ou 2, dans lequel à l'intérieur du récipient chauffé (15) se trouve une zone chauffée (18) pour faire fondre les grains solides, dans lequel la zone chauffée (18) comprend une surface chauffée (19) agencée pour recevoir par gravité le matériau solide depuis une ouverture supérieure (16') en communication avec la trémie (11), et pour faire fondre le matériau ainsi déposé sur la surface chauffée (19).

4. Appareil selon la revendication 3, dans lequel la zone chauffée (18) a une extension couvrant sensiblement le volume du récipient (15) en dessous de la zone chauffée (18), empêchant la chute directe du matériau depuis l'ouverture supérieure (16') vers une paroi inférieure (15‴) du récipient chauffé (15).

5. Appareil selon la revendication 4, dans lequel à l'intérieur du récipient chauffé (15) se trouve un espace libre périphérique (21) obtenu entre la surface latérale du récipient chauffé (15) et le périmètre de la zone chauffée (18), dans lequel ledit espace libre (21) est obtenu avec la fonction de faire passer le matériau fondu sur la surface chauffée (19), vers le fond du récipient chauffé (15), dans lequel la surface chauffée (19) a une forme inclinée de manière à diriger le matériau liquide depuis une zone centrale de la surface chauffée (19), vers l'espace libre périphérique (21).

6. Appareil selon la revendication 5, dans lequel la zone chauffée (18) est supportée à l'intérieur du récipient (15) espacée au-dessus de la paroi inférieure (15‴), par au moins une tige de support (20) s'étendant verticalement à l'intérieur du récipient (15) depuis la paroi inférieure (15‴), de telle sorte que la zone chauffée (18) et la tige de support (20) forment une configuration en parapluie couvrant le volume du récipient en dessous de la zone chauffée (18), empêchant la chute directe du matériau provenant de la trémie (11) sur la paroi inférieure (15‴).

7. Appareil selon la revendication 6, dans lequel la surface chauffée (19) a une forme générale sensiblement conique avec deux côtés inclinés dans des directions opposées réunis à un sommet central supérieur (22), ou une forme générale du type calotte sphérique.

8. Appareil selon la revendication 5 ou 6, dans lequel le dispositif de distribution (17) est relié fonctionnellement au récipient chauffé (15) au moyen d'un conduit de distribution (27), dans lequel le conduit de distribution (27) a une partie proximale (27') reliée à une ouverture inférieure (28) obtenue sur la paroi inférieure (15‴) du récipient chauffé (15).

9. Appareil selon l'une quelconque des revendications 2 à 8, dans lequel le dispositif de distribution (17) comprend un dispositif de réglage automatique pour régler automatiquement l'écoulement du matériau liquide, incluant une électrovanne (30) et un robinet de distribution (31), dans lequel le robinet (31) est commandé par l'électrovanne (30) qui est commandée par le contrôleur électronique (E) sur la base d'un signal de rétroaction envoyé par un capteur de niveau (29) pour mesurer le niveau de matériau liquide déposé sur le fond du récipient (15).

10. Appareil selon la revendication 9, dans lequel le contrôleur électronique (E) est configuré et programmé pour prendre en compte, pendant ladite opération de distribution, des informations préalablement acquises sur le volume occupé par l'échantillon histologique à l'intérieur d'un moule (5), ainsi que sur la taille du fond du moule (5), afin de calibrer adéquatement la distribution de la quantité de matériau d'inclusion pour atteindre un niveau prédéterminé.

11. Appareil selon la revendication 8, dans lequel lesdits moyens de chauffage comprennent une première résistance chauffante capable de chauffer la surface chauffée (19) sur laquelle le matériau solide est déposé, une deuxième résistance chauffante capable de chauffer la structure du récipient (15), et une résistance chauffante supplémentaire pour chauffer le conduit (27).

12. Appareil selon l'une quelconque des revendications précédentes, dans lequel le système de distribution (8) comprend deux récipients chauffés (15) fonctionnant en parallèle et reliés en parallèle au réservoir de confinement (9) au moyen d'une trémie (11) respective, dans lequel chaque récipient chauffé (15) comprend un dispositif de distribution (17) respectif, de manière à paralléliser la distribution de différentes couches de matériau d'inclusion.

13. Appareil selon l'une quelconque des revendications 1 à 11, dans lequel le système de distribution (8) comprend un seul récipient chauffé (15) auquel sont reliés deux dispositifs de distribution (17), pour paralléliser la distribution de différentes couches de matériau d'inclusion.

14. Appareil selon l'une quelconque des revendications précédentes, dans lequel le récipient chauffé (15) est un récipient de forme cylindrique définissant une paroi latérale (15'), une paroi supérieure (15") et ladite paroi inférieure (15‴), dans lequel la paroi supérieure (15") a ladite ouverture supérieure (16') reliée à une partie d'extrémité du conduit de raccordement (16), pour recevoir les grains solides depuis la trémie (11).

15. Procédé pour inclure un échantillon histologique dans un matériau d'inclusion, dans lequel une étape de distribution de matériau d'inclusion est prévue pour distribuer différentes couches de matériau d'inclusion à l'état liquide, dans lequel ledit procédé comprend les étapes consistant à :
- mettre en place un appareil selon l'une quelconque des revendications 1 à 14,
- insérer des grains solides de matériau d'inclusion à l'intérieur du réservoir de confinement (9),
- acheminer progressivement le matériau versé au moyen de la trémie (11),
- faire fondre les grains solides reçus progressivement depuis la trémie (11), au moyen dudit récipient chauffé (15),
- distribuer une couche de matériau d'inclusion à l'état liquide au moyen dudit dispositif de distribution (17),
de sorte que dans le récipient chauffé (15), des quantités limitées de matériau d'inclusion reçu à l'état solide depuis la trémie (11) sont progressivement fondues, par rapport à la quantité totale introduite à l'intérieur du réservoir de confinement (9).
